(19) Europäisches Patentamt / European Patent Office / Office européen des brevets

(11) **EP 4 072 794 B1**

(12) **FASCICULE DE BREVET EUROPEEN**

(45) Date de publication et mention
de la délivrance du brevet:
**22.11.2023 Bulletin 2023/47**

(21) Numéro de dépôt: **20828658.3**

(22) Date de dépôt: **30.11.2020**

(51) Classification Internationale des Brevets (IPC):
**B25J 9/16** *(2006.01)*     **G05B 19/42** *(2006.01)*
**A61H 23/00** *(2006.01)*

(52) Classification Coopérative des Brevets (CPC):
**G05B 19/4207;** B25J 9/1664

(86) Numéro de dépôt international:
**PCT/FR2020/052217**

(87) Numéro de publication internationale:
**WO 2021/116554 (17.06.2021 Gazette 2021/24)**

(54) **DISPOSITIF DE DEFINITION D'UNE SEQUENCE DE DEPLACEMENTS SUR UN MODELE GENERIQUE**

VORRICHTUNG ZUR DEFINITION EINER BEWEGUNGSSEQUENZ IN EINEM GENERISCHEN MODELL

DEVICE FOR DEFINING A SEQUENCE OF MOVEMENTS IN A GENERIC MODEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2019 FR 1914019**

(43) Date de publication de la demande:
**19.10.2022 Bulletin 2022/42**

(73) Titulaire: **Capsix**
**69450 Saint-Cyr-au-Mont-d'Or (FR)**

(72) Inventeurs:
• **EYSSAUTIER, François**
  **69450 Saint Cyr au Mont d'Or (FR)**
• **GIBERT, Guillaume**
  **69003 Lyon (FR)**

(74) Mandataire: **Cabinet Laurent & Charras**
**Le Contemporain**
**50 Chemin de la Bruyère**
**69574 Dardilly Cedex (FR)**

(56) Documents cités:
**FR-A1- 3 067 957      US-A1- 2001 014 781
US-A1- 2017 266 077**

**Description**

DOMAINE TECHNIQUE

L'invention concerne le domaine de la définition d'au moins une séquence de déplacements sur un modèle générique, c'est-à-dire sur un modèle numérique avec des paramètres prédéfinis pour représenter un groupe de sujets.

L'invention peut être appliquée dans de nombreux domaines techniques dans lesquels la surface de travail est variable entre plusieurs individus du groupe de sujets. Typiquement, l'invention trouve une application particulièrement avantageuse pour définir une ou plusieurs trajectoires de massage sur un corps humain générique. En variante, les individus du groupe de sujets peuvent correspondre à des objets physiques. Par exemple, le groupe de sujets peut correspondre à des assiettes en porcelaine et l'invention peut trouver une application dans la définition d'une trajectoire de peinture de ces assiettes en porcelaine.

L'utilisation de cette séquence de déplacements de l'élément de référence sur le modèle générique est également variable. En effet, en enregistrant plusieurs séquences de déplacements associées à des sujets distincts et en définissant ces séquences de déplacements sur le modèle générique, il est possible de comparer deux actions réalisées sur des sujets distincts. En outre, cette séquence de déplacements définie sur le modèle générique peut également être utilisée pour commander un robot comportant des moyens d'adaptation de la séquence de déplacements générique à un sujet particulier.

ART ANTERIEUR

Contrairement aux robots industriels programmés pour suivre une trajectoire prédéterminée, un robot opérant sur une surface inconnue doit comporter des moyens de gestion des déplacements aptes à analyser la surface pour déterminer une trajectoire.

Par exemple, les robots de reconnaissance intègrent généralement au moins une caméra et des moyens de traitement d'image pour analyser, au cours du temps, la surface d'exploration et déterminer la trajectoire à suivre pour le robot.

Cette méthode d'analyse d'une surface inconnue nécessite une grande puissance de calcul pour guider précisément les déplacements du robot au cours du temps. Il s'ensuit que les robots d'exploration se déplacent lentement, de sorte à permettre au dispositif de gestion des déplacements d'optimiser les déplacements du robot en fonction des informations acquises par la caméra et traitées par les moyens de traitement d'image.

En outre, pour un robot de massage ou pour un robot de peinture de porcelaines artisanales, les déplacements du robot doivent être extrêmement précis pour masser les zones recherchées sur le corps d'un individu ou pour appliquer les couches de peinture aux endroits recherchés.

Pour ce faire, il est connu de scanner une surface en trois dimensions afin de permettre à un opérateur de programmer les déplacements d'un robot en utilisant une modélisation numérique en trois dimensions de la surface à traiter par le robot. Par exemple, le document WO 2015/187092 décrit un robot de massage intégrant un scanner en trois dimensions pour scanner le corps d'un patient et permettre à un praticien de déterminer la trajectoire de massage du robot en utilisant une projection d'un modèle en trois dimensions du corps d'un patient sur une tablette tactile.

Ainsi que décrit dans le document FR 3 067 957 A1, il est également possible d'utiliser un robot qui utilise un modèle générique pour lequel au moins une séquence de déplacements est connue. Le robot peut alors adapter le modèle générique en fonction du sujet tout en déformant la séquence de déplacements afin d'appliquer un traitement à un sujet particulier.

Pour ce type de robot, il est également nécessaire de définir au moins une séquence de déplacements sur le modèle générique. Comme pour la définition réalisée dans le document WO 2015/187092, la définition d'au moins une séquence de déplacements sur le modèle générique est généralement réalisée manuellement par un opérateur dessinant un tracé sur le modèle générique.

Ainsi, la définition de cette séquence de déplacements peut être particulièrement longue en raison de la précision recherchée.

Le problème technique de l'invention consiste à faciliter le processus de définition d'au moins une séquence de déplacements sur un modèle générique.

EXPOSE DE L'INVENTION

La présente invention vise à répondre à ce problème technique en réalisant une acquisition des déplacements d'un élément de référence évoluant sur une surface de géométrie variable ; et en adaptant les déplacements captés sur le modèle générique.

Au sens de l'invention, l'« élément de référence » peut correspondre à un effecteur ou à un point ou un ensemble de points de référence correspondant à un élément physique. Par exemple, l'élément de référence peut correspondre à un gant ou à un ensemble de points représentant une main d'un praticien. L'adaptation des déplacements réels sur le modèle générique peut être réalisée avec deux méthodes.

Une première méthode consiste à déformer le modèle générique pour s'adapter au sujet avant d'acquérir la séquence de déplacements. L'acquisition de la séquence de déplacements est alors enregistrée directement sur le modèle générique déformé. Lorsque la séquence de déplacement est terminée, le modèle générique est une nouvelle fois déformé pour reprendre ces paramètres initiaux et la séquence de déplacements est alors déformée en reprenant les mêmes transformations que celles appliquées sur le modèle générique si bien que la séquence de déplacements réelle est transformée en une séquence de déplacements générique.

Une seconde méthode consiste à acquérir la séquence de déplacements indépendamment du modèle générique et à calculer la différence entre le sujet et le modèle générique pour appliquer cette différence à la séquence de déplacements afin de transformer la séquence de déplacements réelle en une séquence de déplacements générique. Cette seconde méthode nécessite néanmoins de repositionner correctement la séquence de déplacements générique sur le modèle générique.

Cette seconde méthode est possible pour des transformations de type translation, rotation et homothétie uniquement alors que la première méthode peut s'appliquer à d'autre types de transformations. Dans les deux cas, l'invention concerne un dispositif de définition d'une séquence de déplacements générique sur un modèle générique, ledit dispositif comportant :

- des moyens d'acquisition d'une position d'un élément de référence évoluant sur une surface ; ledit élément de référence étant configuré pour réaliser une séquence de déplacements réelle ;
- des moyens d'enregistrement de ladite séquence de déplacements réelle ;
- des moyens d'acquisition d'une représentation en trois dimensions de ladite surface ;
- des moyens d'adaptation dudit modèle générique sur ladite représentation en trois dimensions de ladite surface ; et
- des moyens de définition d'une séquence de déplacements générique sur ledit modèle générique en appliquant, à ladite séquence de déplacements réelle, ladite adaptation entre ledit modèle générique et ladite représentation en trois dimensions de ladite surface.

Dans le premier cas, lesdits moyens d'adaptation sont configurés pour adapter ledit modèle générique sur ladite représentation en trois dimensions de ladite surface ; lesdits moyens d'enregistrement sont configurés pour enregistrer ladite séquence de déplacements réelle sur ledit modèle générique alors qu'il est adapté aux dimensions de ladite représentation en trois dimensions de ladite surface ; et lesdits moyens de définition sont configurés pour déformer ledit modèle générique avec ladite séquence de déplacements enregistrée afin que ledit modèle générique reprenne ces paramètres initiaux.

Dans le second cas, lesdits moyens d'adaptation sont configurés pour calculer la différence entre ledit modèle générique et ladite représentation en trois dimensions de ladite surface ; lesdits moyens d'enregistrement sont configurés pour enregistrer ladite séquence de déplacements réelle indépendamment dudit modèle générique ; lesdits moyens de définition sont configurés pour déformer ladite séquence de déplacements enregistrée en fonction de la différence calculée par lesdits moyens d'adaptation ; et le dispositif comporte des moyens de positionnement de ladite séquence de déplacements générique sur ledit modèle générique.

Quelle que soit la méthode d'adaptation utilisée, l'invention permet de définir pratiquement une séquence de déplacements sur un modèle générique sans avoir besoin de visualiser la représentation en trois dimensions de la surface ou le modèle générique.

Il est ainsi possible de capter plusieurs séquences de déplacements et de les adapter sur un même modèle générique afin de comparer plusieurs trajectoires réalisées sur une même surface ou sur plusieurs surfaces distinctes.

Dans l'exemple de la peinture de porcelaines artisanales, l'invention permet ainsi de connaître les mouvements les plus souvent réalisés par les peintres. En examinant les différents rendus, il est possible de déterminer les mouvements qui sont les plus efficaces.

De la même manière, dans l'exemple du suivi des trajectoires de massage, il est possible de connaître les points les plus souvent sollicités par les praticiens ou d'enregistrer une ou plusieurs trajectoires de massage pour qu'elles puissent être reproduites par un robot. Ces trajectoires de massages peuvent, en outre, être enregistrées sur des individus différents. De plus, plusieurs séquences de déplacement peuvent être numérisées pour effectuer plusieurs types de massage distincts. Plusieurs modèles génériques peuvent également être réalisés pour améliorer l'adaptation du modèle générique avec le corps du patient, par exemple en utilisant trois types de modèles génériques pour chaque genre : une personne de grande, de petite et de taille moyenne et pour différentes classes d'âges : enfants, adolescents et adultes ; et/ou pour chaque position d'enregistrement : position assise, position debout et position couchée.

Selon un mode de réalisation, lesdits moyens d'acquisition de ladite position de l'élément de référence sont configurés pour capter une orientation dudit élément de référence de sorte à reporter cette orientation sur les différents points de la séquence de déplacements générique.

Selon un mode de réalisation, lesdits moyens d'acquisition de ladite position de l'élément de référence sont configurés pour capter les actions réalisées ou les contraintes subies par ledit élément de référence de sorte à reporter ces actions ou ces contraintes sur les différents points de la séquence de déplacements générique.

Ce mode de réalisation permet, par exemple, de commander le fonctionnement d'actionneurs lors des déplacements du robot. Dans l'exemple du robot de peinture de porcelaines artisanales, le robot peut effectuer des traitements de surface spécifiques à certains endroits. Dans l'exemple du robot de massage, certaines positions du robot peuvent commander le déclenchement de moyens de vibration pour améliorer le confort et/ou l'effet du massage. De plus, la séquence de déplacements générique peut ainsi comporter plusieurs trajectoires réalisées avec un mouvement de palper-rouler alors que d'autres déplacements sont effectués avec un autre type de mouvement. Ainsi, les contraintes subies par l'élément de référence peuvent correspondre à des contraintes physiques, par exemple de pression ou de température, ou des contraintes externes, par exemple des sons émis lors du massage ou la diffusion d'huiles essentielles.

Selon un mode de réalisation, ledit modèle générique et ladite représentation en trois dimensions de ladite surface étant formalisés sous la forme de nuages de points, lesdits moyens d'adaptation comportent :

- des moyens de calcul d'une direction normale à chaque point de ladite représentation en trois dimensions de ladite surface ; et
- des moyens de recherche, pour chaque point du nuage de points de ladite représentation en trois dimensions, du point du modèle générique dans un voisinage proche pour lequel la différence entre la direction normale du point du modèle générique et la direction normale du point d'intérêt est la plus faible;
- des moyens de détermination d'une distance entre ledit point détecté du modèle générique et ledit point d'intérêt ; et
- des moyens de recherche d'une transformation globale du modèle générique en fonction des distances déterminées pour l'ensemble des points du nuage de points de ladite représentation en trois dimensions.

Les directions normales permettent d'obtenir une information relative à l'orientation des faces du modèle générique et de la représentation en trois dimensions de la surface. Contrairement à une simple comparaison de coordonnées point à point, une comparaison des faces permet d'obtenir une reconnaissance plus efficace.

En outre, l'adaptation du modèle générique ou de la séquence de déplacements est réalisée pas à pas en modifiant petit à petit le modèle générique ou la séquence de déplacements en fonction de la moyenne des distances.

Il s'ensuit que ce mode de réalisation permet d'adapter efficacement le modèle générique ou la séquence de déplacements en comparant les directions normales de chaque point du modèle générique ou de la séquence de déplacements et les directions normales de la représentation en trois dimensions de la surface.

Selon un mode de réalisation, lesdits moyens de recherche sont configurés pour rechercher les points du modèle générique dans une sphère prédéfinie autour du point d'intérêt.

Ce mode de réalisation vise à limiter la zone de recherche des points du modèle générique de sorte à limiter le temps de calcul. En outre, la limitation de la zone de recherche permet également de limiter l'amplitude de la modification du modèle générique entre deux comparaisons de sorte à augmenter la précision de la modification du modèle générique.

Selon un mode de réalisation, les directions normales sont déterminées par construction d'une face au moyen des coordonnées des trois ou quatre points les plus proches du point d'intérêt.

Ce mode de réalisation permet de construire efficacement les faces du modèle générique et de la représentation en trois dimensions de la surface.

Selon un mode de réalisation, lesdits moyens d'adaptation comportent :

- des moyens de détection de points caractéristiques sur ladite représentation en trois dimensions ; et
- des moyens de déformation du modèle générique en rotation et/ou en translation de sorte que ladite position desdits points caractéristiques corresponde à une position de points caractéristiques du modèle générique.

Ce mode de réalisation permet d'opérer une première adaptation grossière du modèle générique afin d'améliorer la rapidité de l'adaptation précise réalisée par l'intermédiaire des normales. Dans l'exemple du robot de peinture de porcelaines artisanales, les points caractéristiques peuvent correspondre aux extrémités supérieures et inférieures de la porcelaine.

Dans l'exemple du robot de massage, les points caractéristiques peuvent correspondre à l'extrémité supérieure du crâne, à la position des aisselles et à la position de l'entrejambe.

Selon un mode de réalisation, lesdits moyens d'acquisition comportent des moyens de pré-traitement de ladite représentation en trois dimensions au moyen de la capture de plusieurs représentations en trois dimensions et de la réalisation d'une moyenne des coordonnées des points entre les différentes représentations en trois dimensions. Ce mode de réalisation permet d'améliorer la précision de la représentation en trois dimensions et donc de l'adaptation du modèle générique.

Selon un mode de réalisation, lesdits moyens de pré-traitement réalisent un filtrage de ladite moyenne des coordonnées des points entre les différentes représentations en trois dimensions. Ce mode de réalisation permet également d'améliorer la précision de la représentation en trois dimensions et, donc, de l'adaptation du modèle générique.

Selon un mode de réalisation, ledit élément de référence correspond à un gant et lesdites séquences de déplacements correspondent à des déplacements réalisés par ledit gant lors d'un massage.

## DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures 1 à 3 qui constituent :

Figure 1 : un ordinogramme des étapes de détermination d'une transformation d'un modèle générique selon un mode de réalisation de l'invention ;
Figure 2 : un ordinogramme des étapes de fonctionnement d'un dispositif de définition d'une séquence de déplacements générique sur un modèle générique selon un premier mode de réalisation ; et
Figure 3 : un ordinogramme des étapes de fonctionnement d'un dispositif de définition d'une séquence de déplacements générique sur un modèle générique selon un second mode de réalisation.

Dans la description qui suit, l'invention est décrite en référence à une définition d'une séquence de massage. Cependant, l'invention n'est pas limitée à cette application spécifique et elle peut être utilisée pour des séquences de déplacements diverses liées à des surfaces dont la géométrie n'est pas prédéterminée.

## DESCRIPTION DETAILLEE DE L'INVENTION

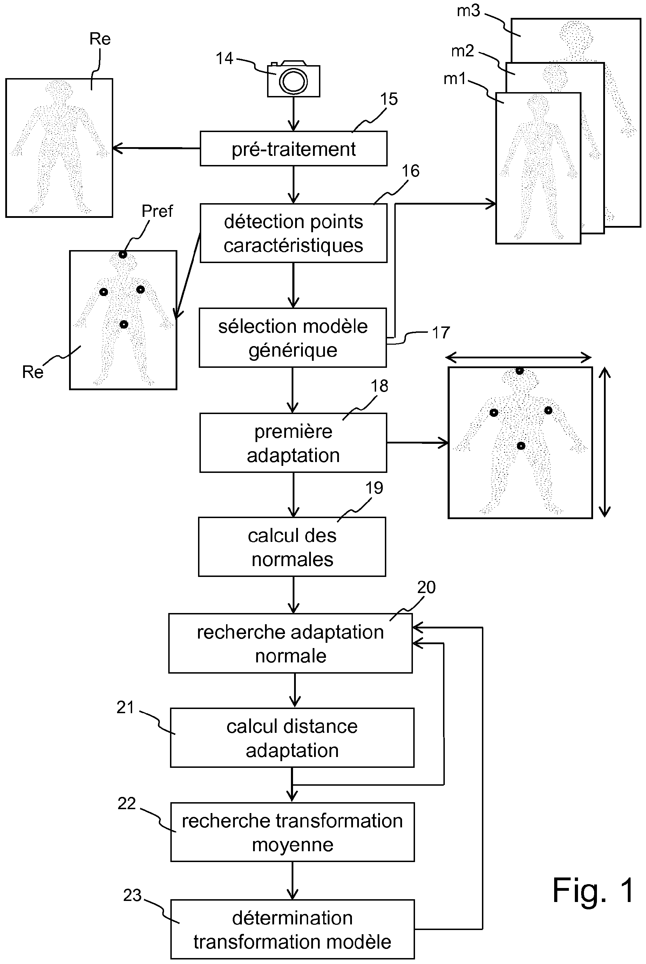

Tel qu'illustré sur la figure 1, l'analyse de la surface est réalisée par des moyens d'acquisition **14** aptes à fournir une représentation en trois dimensions **Re** de la surface. La représentation en trois dimensions **Re** prend la forme d'un nuage de points dans lequel chaque point présente trois coordonnées d'un système orthonormé : x, y et z.

Ces moyens d'acquisition **14** peuvent correspondre à un ensemble de capteurs photographiques, un ensemble de capteurs infrarouges, un capteur tomographique, un capteur stéréoscopique ou tout autre capteur connu permettant d'acquérir une représentation en trois dimensions d'une surface. Par exemple, la caméra Kinect® de la société Microsoft® peut être utilisée pour obtenir cette représentation en trois dimensions **Re**.

Pour obtenir cette représentation en trois dimensions **Re** sans capter l'environnement, il est possible de capter un premier nuage de points correspondant à l'environnement et un second nuage de points correspondant à la surface dans son environnement. Seuls les points différents entre les deux nuages de points sont conservés de sorte à extraire de l'environnement les points correspondant à la surface. Cette méthode permet de s'abstraire d'un environnement standardisé pour l'enregistrement et de s'adapter à n'importe quel environnement.

Tel qu'illustré sur la figure 1, ces capteurs **14** sont souvent mis en oeuvre avec des moyens de pré-traitement **15** afin de fournir une représentation en trois dimensions **Re** avec une qualité ou une précision améliorée. Par exemple, les moyens de pré-traitement **15** peuvent correspondre à un algorithme d'égalisation d'histogrammes, de filtrage, de moyennage de la représentation sur plusieurs représentations successives...

Par exemple, il est possible d'utiliser l'approche décrite dans la publication scientifique « KinectFusion: Real-time 3D Reconstruction and Interaction Using a Moving Depth Camera* » publiée le 16 octobre 2011 dans UIST' 11 afin d'obtenir une représentation en trois dimensions de meilleure qualité. Le dispositif met ensuite en oeuvre des traitements informatiques afin d'adapter un modèle générique **m1**, **m2**, **m3** avec la représentation en trois dimensions **Re**. Les modèles génériques **m1**, **m2**, **m3** sont également formalisés sous la forme d'un nuage de points dans lequel chaque point présente trois coordonnées d'un système orthonormé : x, y et z. De préférence, le modèle générique est composé par un modèle moyen **ModMoy** de N vertex de trois coordonnées et d'une matrice de déformation **ModSigma** de M composantes morphologiques par 3N coordonnées, c'est-à-dire trois coordonnées pour N vertex. Un grand nombre de personnes différentes sont nécessaires pour enrichir chaque modèle générique **m1**, **m2**, **m3**, par exemple mille personnes.

Une analyse en composantes principales est appliquée pour réduire la dimension des données. En appliquant une analyse en composantes principales sur ces données, il est possible de déterminer la variance dans les données et associer la variance commune sur une composante. Ainsi, au lieu de conserver une composante par personne, chaque modèle générique **m1**, **m2**, **m3** stocke une vingtaine de composantes qui vont expliquer la majorité de la variance pour les mille personnes. Cette méthode est décrite plus longuement dans la publication scientifique « Building Statistical Shape Spaces for 3D Human Modeling, Pischchulin & all » publiée le 19 mars 2015 dans la revue « Published in Pattern Recognition 2017 ».

De préférence, les modèles génériques **m1**, **m2**, **m3** sont stockés dans une mémoire accessible par les moyens de traitement d'image du dispositif aptes à réaliser l'adaptation d'un modèle générique **m1**, **m2**, **m3** avec la représentation en trois dimensions **Re**.

Pour ce faire, lorsque la représentation en trois dimensions **Re** est obtenue, le dispositif met en oeuvre une détection des points caractéristiques **Pref** de cette représentation en trois dimensions **Re** par des moyens de traitement numérique **16**. Sur l'exemple de la figure 1, les points caractéristiques **Pref** correspondent à l'extrémité supérieure du crâne, à la position des aisselles et à la position de l'entrejambe. Ces moyens de traitement numérique **16** peuvent mettre en oeuvre toutes les méthodes connues pour détecter des éléments sur une image, telles que la méthode de Viola et Jones par exemple.

De préférence, pour détecter les points caractéristiques **Pref**, le nuage de points est transformé en une image de profondeur c'est-à-dire une image en niveaux de gris, par exemple codée sur 12 bits permettant de coder des profondeurs allant de 0 à 4095 mm. Cette image de profondeur est ensuite seuillée et binarisée pour ne faire ressortir avec une valeur 1 que les pixels correspondant à l'objet/corps d'intérêt et avec une valeur 0 les pixels correspondant à l'environnement. Ensuite, une détection de contour est appliquée sur cette image binarisée en utilisant, par exemple, la méthode décrite dans Suzuki, S. and Abe, K., Topological Structural Analysis of Digitized Binary Images by Border Following, CVGIP 30 1, pp 32-46 (1985). Les points saillants du contour et ses défauts de convexité (déterminés en utilisant, par exemple, la méthode Sklansky, J., Finding the Convex Hull of a Simple Polygon. PRL 1 $number, pp 79-83 (1982)) sont utilisés comme points caractéristiques **Pref.**

Des moyens de sélection **17** du modèle générique **m1**, **m2**, **m3** sont ensuite mis en oeuvre pour sélectionner le modèle générique **m1**, **m2**, **m3** le plus proche de la représentation en trois dimensions **Re**.

Par exemple, cette sélection peut être réalisée en calculant la distance entre le point caractéristique **Pref** du sommet du crâne et le point caractéristique de l'entrejambe de sorte à estimer grossièrement la taille en hauteur de la représentation en trois dimensions **Re** et en sélectionnant le modèle générique **m1**, **m2**, **m3** pour lequel la taille en hauteur est la plus proche. De même ou en complément, la sélection du modèle générique **m1**, **m2**, **m3** peut être réalisée en utilisant la largeur de la représentation en trois dimensions **Re** en calculant la distance entre les points caractéristique **Pref** des aisselles.

En outre, le modèle générique **m1**, **m2**, **m3** peut être articulé grâce à des os virtuels représentant les os les plus importants du squelette humain. Par exemple, quinze os virtuels peuvent être modélisés sur le modèle générique **m1**, **m2**, **m3** pour définir la position et la forme de la colonne vertébrale, des fémurs, des tibias, des cubitus, des humérus et du crâne. L'orientation de ces os virtuels permet de définir la pose du modèle générique, c'est-à-dire si le modèle générique **m1**, **m2**, **m3** à un bras en l'air, les jambes écartées...

Cette pose du modèle générique **m1**, **m2**, **m3** peut également être déterminée par les moyens de sélection **17** en comparant la distance (calculée, par exemple, en utilisant la méthode Hu. Visual Pattern Recognition by Moment Invariants, IRE Transactions on Information Theory, 8:2, pp. 179-187, 1962.)) entre le contour de l'image de profondeur de l'objet/corps d'intérêt avec une base de données de contours d'images de profondeur du modèle générique dans plusieurs milliers de postures. L'image de profondeur du modèle générique **m1**, **m2**, **m3** articulé la plus proche de l'image de profondeur de l'objet/corps d'intérêt est sélectionnée et les valeurs de rotations des os virtuels sauvegardées.

Une première adaptation est ensuite réalisée par des moyens d'adaptation **18** en déformant le modèle générique sélectionné pour s'approcher de la représentation en trois dimensions **Re**. Par exemple, cette première adaptation peut simplement déformer en largeur et en hauteur le modèle générique sélectionné pour que l'écartement des points caractéristiques **Pref** du modèle générique sélectionné corresponde à l'écartement des points caractéristiques **Pref** de la représentation en trois dimensions **Re**. Cette première adaptation peut également définir la pose des os virtuels du modèle générique **m1**, **m2**, **m3**.

Suite à cette première adaptation assez grossière, il est possible d'utiliser une seconde adaptation plus précise en utilisant les directions normales formées par chaque surface définie entre les points de la représentation en trois dimensions **Re**. Pour ce faire, le dispositif intègre des moyens de calcul des normales **19** de chaque surface de la représentation en trois dimensions **Re** et du le modèle générique sélectionné.

Par exemple, les directions normales peuvent être déterminées par construction de chaque face de la représentation en trois dimensions **Re** au moyen des coordonnées des trois ou quatre points les plus proches du point d'intérêt. En variante, les directions normales du modèle générique peuvent être calculées lors de l'étape de définition du modèle générique.

Le dispositif utilise ensuite des moyens de recherche **20** aptes à détecter, pour chaque point du nuage de points de la représentation en trois dimensions **Re**, le point du modèle générique sélectionné dans un voisinage proche pour lequel la différence entre la direction normale du point du modèle générique et la direction normale du point d'intérêt est la plus faible. Lorsque les os virtuels sont une composante du modèle générique sélectionné, les moyens de recherche **20** adaptent la position et la taille des os virtuels en faisant varier les caractéristiques de chaque os virtuel pour adapter les os virtuels avec la position des éléments du corps présent sur la représentation en trois dimensions **Re**.

Par exemple, les moyens de recherche **20** peuvent être configurés pour rechercher les points du modèle générique dans une sphère prédéfinie autour du point d'intérêt. De préférence, le rayon de cette sphère est déterminé en fonction du nombre de vertex du modèle générique et de la taille de l'objet/corps d'intérêt de telle façon qu'une dizaine des points soit inclus dans cette sphère.

A l'aide de l'ensemble de ces directions normales, le dispositif peut ensuite calculer la différence du modèle générique sélectionné avec la représentation en trois dimensions **Re** en utilisant des moyens de détermination **21** aptes à calculer la distance entre les points d'intérêts et les points détectés par les moyens de recherche sur le modèle générique sélectionné. L'ensemble de ces distances forme des vecteurs de transformations qu'il faudrait appliquer au point d'intérêt pour qu'il corresponde avec le point détecté. Des moyens de recherche **22** visent à déterminer une moyenne de ces vecteurs de transformation de sorte à obtenir une transformation globale du modèle générique sélectionné.

En d'autres termes, en considérant un nouveau vecteur de transformation **CompVec** de M composantes, il est possible de connaître la configuration en trois dimensions des vertex **Pts3D** en appliquant la formule suivante :

$$\textbf{Pts3D} = \textbf{ModMoy} + \textbf{CompVec} * \textbf{ModSigma}$$

Pour une configuration **Pts3D** inconnue, pour un nouveau patient par exemple, le but est de chercher les valeurs des composantes morphologiques **CompVec** qui correspondent à cette personne connaissant le modèle moyen **ModMoyen** et la matrice de déformation **ModSigma.**

Pour ce faire, les moyens de recherche **22** calculent la différence **DiffMod** entre la configuration en trois dimensions des vertex **Pts3D** et le modèle moyen **ModMoyen** ainsi que la matrice pseudo inverse **ModSigmaInv** de **ModSigma.**

Par exemple, la matrice pseudo inverse **ModSigmaInv** peut être calculée en décomposant en valeurs singulières la matrice **ModSigma** en utilisant les relations suivantes :

**ModSigma** = U E V* ;
**ModSigmaInv** = V E' U* ;
avec $E^t$ correspondant à la matrice transposée de E ;
V* étant la matrice transconjuguée de V ; et
U* étant la matrice transconjuguée de U.

A l'aide de ces données, les moyens de recherche **22** calculent les composantes morphologiques **CompVec** avec la formule suivante :

$$\textbf{DiffMod} * \textbf{ModSigmaInv} = \textbf{CompVec} * \textbf{ModSigma} * \textbf{ModSigmaInv}$$

Soit, **CompVec = DiffMod * ModSigmaInv** qui permet également d'obtenir les composantes morphologiques **CompVec** pour un patient spécifique.

Le vecteur de transformation **CompVec** est ensuite appliqué au modèle générique sélectionné, la pose est de nouveau estimée comme précédemment et le modèle générique ajusté si nécessaire et une nouvelle recherche est effectuée jusqu'à ce que le modèle générique soit assez proche de la représentation en trois dimensions **Re**. La boucle s'arrête lorsque la distance euclidienne moyenne entre tous les vertex du modèle générique et leurs correspondants sur le nuage de points est inférieure à un seuil défini en fonction du nombre de vertex du modèle générique et de la taille de l'objet/corps d'intérêt, 2 mm par exemple, ou lorsqu'un nombre d'itérations maximum, 100 itérations par exemple, est atteint alors que la distance moyenne inférieure au seuil n'est pas atteinte.

Une phase de calibration entre le capteur **14** et le robot doit souvent être effectuée. Pour calibrer le capteur de vision **14** et le robot, il est possible d'enregistrer les coordonnées d'au moins trois points communs dans les deux repères. En pratique, un nombre de points **N** supérieur à trois est préférentiellement utilisés. Le robot est déplacé sur la zone de travail et s'arrête N fois.

A chaque arrêt, la position du robot est enregistrée en calculant les déplacements effectués par la consigne de déplacement du robot et une détection permet de connaître la position en trois dimensions de cet arrêt au moyen du capteur de vision **14**.

A la fin de ces N arrêts, les coordonnées des N points sont connues dans les deux repères. Le barycentre de la distribution des N points dans les deux repères est déterminé en utilisant les relations suivantes :

BarycentreA = 1/N somme(PA(i)) pour i=1 à N avec PA(i) un point dans le repère du capteur **14** ; et
BarycentreB = 1/N somme(PB(i)) pour i=1 à N avec PB(i) un point dans le repère du robot.

La matrice de covariance C est ensuite déterminée par la relation suivante :

$$C = \text{somme}((PA(i)\text{-BarycentreA})(PB(i)\text{-barycentreB})^t) \text{ pour } i=1 \text{ à } N$$

Cette matrice de covariance C est ensuite décomposée en valeurs singulières :

$$C = U\ E\ V^*$$

La matrice de rotation R entre les deux repères est alors obtenue par la relation suivante :

$$R\ =\ V\ U^t\ ;$$

si le déterminant de R est négatif, il est possible de multiplier la troisième colonne de la matrice de rotation R par -1.
La translation à appliquer entre les deux repères est déterminée par la relation suivante :

$$T = -\ R\ *\ \text{BarycentreA} + \text{BarycentreB}$$

Il est ainsi possible de convertir n'importe quel point du repère du capteur **14** Pa dans le repère du robot Pb en appliquant la relation suivante :

$$Pb = R\ *\ Pa + T$$

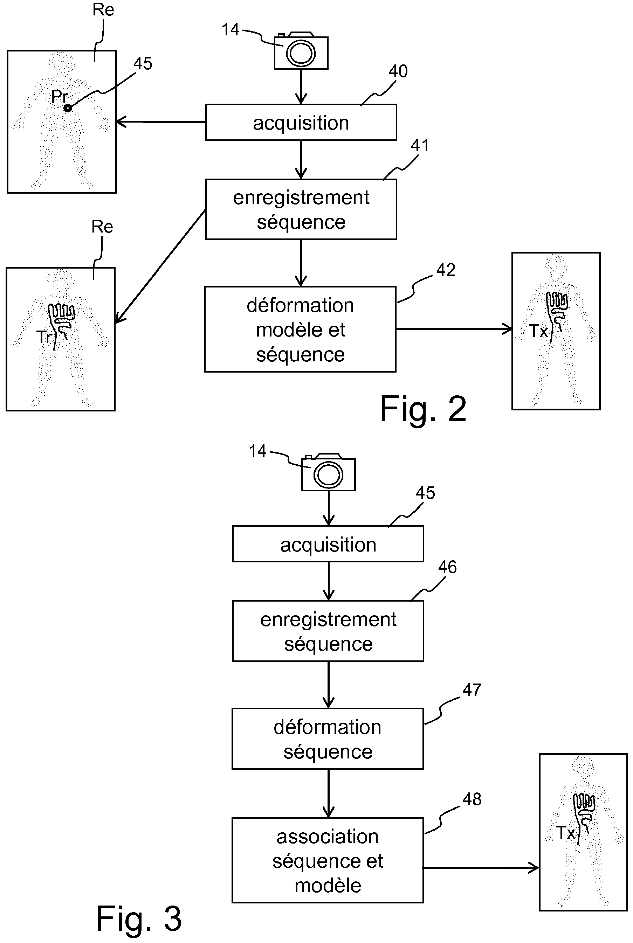

Dans un premier mode de réalisation de l'invention, illustré sur la figure 2, l'adaptation du modèle générique sélectionné permet d'acquérir une position **Pr** d'un élément de référence **45** directement sur le modèle générique adapté.
L'acquisition est réalisée, dans une étape **40**, en déterminant la position **Pr** de l'élément de référence **45** sur la représentation en trois dimensions **Re** de la surface. L'élément de référence peut correspondre à un effecteur ou à un point ou un ensemble de points de référence correspondant à un élément physique. Par exemple, l'élément de référence peut correspondre à un gant ou à un ensemble de points représentant une main d'un praticien. La détermination de la position **Pr** de l'élément de référence **45** sur la représentation en trois dimensions **Re** de la surface peut être réalisée par un module de triangulation de position ou par une analyse de traitement d'image analogue à celle utilisée pour capter la représentation en trois dimensions **Re** de la surface. Outre la position **Pr** de l'élément de référence **45** sur la représentation en trois dimensions **Re** de la surface, l'acquisition peut également permettre de capter une orientation de l'élément de référence **45** ou des actions réalisées avec l'élément de référence **45**, telles qu'un chauffage, ou un mouvement particulier.
L'acquisition est reproduite plusieurs fois, dans une étape **41**, de sorte à former une séquence d'enregistrements **Tr** illustrant les déplacements réels effectués par l'élément de référence **45**. Par exemple, l'acquisition peut être réalisée toutes les 0,1s.
Lorsque la séquence de déplacements **Tr** est terminée, les points de la séquence **Tr** sont projetés sur le modèle générique déformé à la morphologie de la personne. Ensuite, le modèle générique est une nouvelle fois déformé pour reprendre ces paramètres initiaux.
Pour ce faire, les transformations du modèle générique sont calculées depuis les paramètres initiaux jusqu'aux paramètres du modèle générique déformé. Ensuite, la séquence de déplacements **Tr** est déformée en reprenant les mêmes transformations que celles appliquées sur le modèle générique.
Ainsi, la séquence de déplacements réelle **Tr** est transformée en une séquence de déplacements générique **Tx** associée à un modèle générique.
Dans un second mode de réalisation de l'invention, illustré sur la figure 3, l'acquisition **45** est réalisée indépendamment du modèle générique. Dans ce mode de réalisation, l'étape **23** de la figure 1 se contente de déterminer les transformations du modèle générique sans les appliquer réellement. Pour pouvoir recaler la séquence de déplacement **Tx** sur le modèle générique, la séquence de déplacement peut passer par des points caractéristiques de la morphologie de la surface. Par exemple, l'acquisition **45** peut être réalisée en déplaçant l'élément de référence **45** au niveau du sommet du crâne et au niveau des aisselles du sujet.
Lorsque la séquence de déplacements **Tr** est enregistrée, dans une étape **46**, une étape **47** applique la différence entre le modèle générique et la représentation en trois dimensions **Re** de la surface pour transformer la séquence de déplacements réelle **Tr** en une séquence de déplacements générique **Tx**. Une dernière étape **48** repositionne la séquence de déplacements générique sur le modèle générique sélectionné. De préférence, cette étape **48** est réalisée en cherchant à faire correspondre les points caractéristiques par lesquels sont passés l'élément de référence **45** et la position de ces points caractéristiques sur le modèle générique. Cette étape **48** peut également être réalisée en prenant en compte la pose du sujet.

L'invention permet ainsi de définir une séquence de déplacements générique **Tx** sur un modèle générique de manière pratique, c'est-à-dire sans que l'opérateur n'ait besoin d'utiliser un écran d'un ordinateur ou d'une tablette numérique. Ainsi, l'invention permet de simplifier grandement le processus de définition de la séquence de déplacements car l'opérateur est souvent plus efficace lors d'un enregistrement pratique en situation réelle.

Cette séquence de déplacement peut ensuite être utilisée pour diverses applications, telles que la comparaison de plusieurs séquences de déplacements ou la commande d'un robot comportant des moyens d'adaptation de la séquence de déplacements générique à un sujet particulier.

## Revendications

1. Dispositif de définition d'une séquence de déplacements générique (Tx) sur un modèle générique (m1-m3) qui comporte :

   - des moyens d'acquisition (40, 45) d'une position (Pr) d'un élément de référence (45) évoluant sur une surface ; ledit élément de référence (45) étant configuré pour réaliser une séquence de déplacements réelle (Tr) ;
   - des moyens d'enregistrement (41, 46) de ladite séquence de déplacements réelle (Tr) ;
   - des moyens d'acquisition (14) d'une représentation en trois dimensions (Re) de ladite surface ;
   - des moyens d'adaptation (23) dudit modèle générique (m1-m3) sur ladite représentation en trois dimensions (Re) de ladite surface ; et
   - des moyens de définition (42, 47) d'une séquence de déplacements générique (Tx) sur ledit modèle générique (m1-m3) en appliquant, à ladite séquence de déplacements réelle (Tr), ladite adaptation entre ledit modèle générique (m1-m3) et ladite représentation en trois dimensions (Re) de ladite surface.

2. Dispositif selon la revendication 1, *dans lequel* lesdits moyens d'adaptation (23) sont configurés pour adapter ledit modèle générique (m1-m3) sur ladite représentation en trois dimensions (Re) de ladite surface ; lesdits moyens d'enregistrement (41) sont configurés pour enregistrer ladite séquence de déplacements réelle (Tr) sur ledit modèle générique (m1-m3) alors qu'il est adapté aux dimensions de ladite représentation en trois dimensions (Re) de ladite surface ; et lesdits moyens de définition (42) sont configurés pour déformer ledit modèle générique (m1-m3) avec ladite séquence de déplacements enregistrée afin que ledit modèle générique reprenne ces paramètres initiaux.

3. Dispositif selon la revendication 1, *dans lequel* lesdits moyens d'adaptation (23) sont configurés pour calculer la différence entre ledit modèle générique (m1-m3) et ladite représentation en trois dimensions (Re) de ladite surface ; lesdits moyens d'enregistrement (46) sont configurés pour enregistrer ladite séquence de déplacements réelle (Tr) indépendamment dudit modèle générique (m1-m3) ; lesdits moyens de définition (47) sont configurés pour déformer ladite séquence de déplacements enregistrée en fonction de la différence calculée par lesdits moyens d'adaptation (23) ; et le dispositif comporte des moyens de positionnement (48) de ladite séquence de déplacements générique sur ledit modèle générique.

4. Dispositif selon la revendication 2 ou 3, *dans lequel* lesdits moyens d'acquisition (40, 45) de ladite position (Pr) dudit élément de référence (45) sont configurés pour capter une orientation dudit élément de référence (45) de sorte à reporter cette orientation sur les différents points de la séquence de déplacements générique (Tx).

5. Dispositif selon la revendication 2 ou 3, *dans lequel* lesdits moyens d'acquisition (40, 45) de ladite position (Pr) dudit élément de référence (45) sont configurés pour capter les actions réalisées ou les contraintes subies par ledit élément de référence (45) de sorte à reporter ces actions ou ces contraintes sur les différents points de la séquence de déplacements générique (Tx).

6. Dispositif selon la revendication 1, *dans lequel* ledit modèle générique (m1-m3) et ladite représentation en trois dimensions (Re) de ladite surface étant formalisés sous la forme de nuages de points, lesdits moyens d'adaptation (23) comportent :

   - des moyens de calcul (19) d'une direction normale à chaque point de ladite représentation en trois dimensions (Re) de ladite surface ; et

- des moyens de recherche (20), pour chaque point du nuage de points de ladite représentation en trois dimensions (Re), du point du modèle générique (m1-m3) dans un voisinage proche pour lequel la différence entre la direction normale du point du modèle générique (m1-m3) et la direction normale du point d'intérêt est la plus faible ;

- des moyens de détermination (21) d'une distance entre ledit point détecté du modèle générique (m1-m3) et ledit point d'intérêt ; et

- des moyens de recherche (22) d'une transformation globale du modèle générique (m1-m3) en fonction des distances déterminées pour l'ensemble des points du nuage de points de ladite représentation en trois dimensions (Re).

7. Dispositif selon la revendication 6, *dans lequel* lesdits moyens de recherche (22) sont configurés pour rechercher les points du modèle générique dans une sphère prédéfinie autour du point d'intérêt.

8. Dispositif selon la revendication 6 ou 7, *dans lequel* les directions normales sont déterminées par construction d'une face au moyen des coordonnées des trois ou quatre points les plus proches du point d'intérêt.

9. Dispositif selon l'une des revendications 1 à 8, *dans lequel* lesdits moyens d'adaptation (23) comportent :

- des moyens de détection (16) de points caractéristiques (Pref) sur ladite représentation en trois dimensions (Re) ; et

- des moyens de déformation (18) du modèle générique (m1-m3) en rotation et/ou en translation de sorte que ladite position desdits points caractéristiques corresponde à une position de points caractéristiques du modèle générique.

10. Dispositif selon l'une des revendications 1 à 9, *dans lequel* ledit élément de référence (45) correspond à un gant et lesdites séquences de déplacements (Tr, Tx) correspondent à des déplacements réalisés par ledit gant lors d'un massage.

**Patentansprüche**

1. Vorrichtung zur Definition einer Sequenz generischer Bewegungen (Tx) in einem generischen Modell (m1-m3), das umfasst:

- Mittel zur Erfassung (40, 45) der Position (Pr) eines Referenzelementes (45) das sich auf einer Fläche bewegt; dieses Referenzelement (45) ist dazu konfiguriert, eine reale Bewegungssequenz (Tr) auszuführen;

- Mittel zur Aufzeichnung (41, 46) dieser realen Bewegungssequenz (Tr);

- Mittel zur Erfassung (14) einer dreidimensionalen Darstellung (Re) dieser Fläche;

- Mittel zur Anpassung (23) dieses generischen Modells (m1-m3) an diese dreidimensionale Darstellung (Re) dieser Fläche; und

- Mittel zur Definition (42, 47) einer generischen Bewegungssequenz (Tx) in diesem generischen Modell (m1-m3), indem auf diese reale Bewegungssequenz (Tr) diese Anpassung zwischen diesem generischen Modell (ml- m3) und dieser dreidimensionalen Darstellung (Re) dieser Fläche angewandt wird.

2. Vorrichtung nach Anspruch 1, *bei der* die erwähnten Anpassungsmittel (23) dazu konfiguriert sind, dieses generische Modell (m1-m3) an die erwähnte dreidimensionale Darstellung (Re) dieser Fläche anzupassen; die erwähnten Aufzeichnungsmittel (41) sind zur Aufzeichnung dieser realen Bewegung (Tr) in diesem generischen Modell (m1-m3) konfiguriert, während es an die Dimensionen dieser dreidimensionalen Darstellung (Re) dieser Fläche angepasst wird; und die erwähnten Definitionsmittel (42) sind zur Verformung dieses generischen Modells (m1-m3) mit der erwähnten aufgezeichneten Bewegungssequenz konfiguriert, damit dieses generische Modell wieder seine ursprünglichen Parameter annimmt.

3. Vorrichtung nach Anspruch 1, *bei der* diese Anpassungsmittel (23) zur Berechnung der Differenz zwischen diesem generischen Modell (m1-m3) und dieser dreidimensionalen Darstellung (Re) dieser Fläche konfiguriert sind; die erwähnten Aufzeichnungsmittel (46) sind konfiguriert zur Aufzeichnung dieser realen Bewegungssequenz (Tr), unabhängig vom erwähnten generischen Modell (m1-m3); die erwähnten Definitionsmittel (47) sind konfiguriert zur Verformung dieser aufgezeichneten Bewegungssequenz, in Abhängigkeit von der von den erwähnten Anpassungsmitteln (23) berechneten Differenz; und die Vorrichtung enthält Mittel zur Positionierung (48) der erwähnten generischen Bewegungssequenz in diesem generischen Modell.

4. Vorrichtung nach Anspruch 2 oder 3, *bei dem* die erwähnten Erfassungsmittel (40, 45) dieser Position (Pr) dieses Referenzelementes (45) dazu konfiguriert sind, eine Ausrichtung dieses Referenzelementes (45) zu erfassen, um diese Ausrichtung auf die verschiedenen Punkte der generischen Bewegungssequenz (Tx) zu übertragen.

5. Vorrichtung nach Anspruch 2 oder 3, *bei der* diese Erfassungsmittel (40, 45) der erwähnten Position (Pr) dieses Referenzelementes (45) dazu konfiguriert sind, die durchgeführten Aktionen oder die vom Referenzelement (45) erlittenen Beanspruchungen zu erfassen, um diese Aktionen oder Beanspruchungen auf die verschiedenen Punkte der generischen Bewegungssequenz (Tx) zu übertragen.

6. Vorrichtung nach Anspruch 1, *bei der* dieses generische Modell (m1-m3) und diese dreidimensionale Darstellung (Re) dieser Fläche in Form von Punktewolken formalisiert werden, die erwähnten Anpassungsmittel (23) enthalten:

   - Mittel zur Berechnung (19) einer normalen Richtung an jedem Punkt dieser dreidimensionalen Darstellung (Re) dieser Fläche; und
   - Mittel zur Suche (Re) für jeden Punkt dieser dreidimensionalen Darstellung (Re), des Punktes des generischen Modells (m1-m3) in der nahen Umgebung, für den die Differenz zwischen der normalen Richtung des Punktes des generischen Modells (m1-m3) und der normalen Richtung des interessierenden Punktes am kleinsten ist;
   - Mittel zur Bestimmung (21) eines Abstandes zwischen diesem erkannten Punkt des generischen Modells (m1-m3) und dem interessierenden Punkt: und
   - Mittel zur Suche (22) für eine globale Transformation des generischen Modells (m1-m3), in Abhändigkeit von den Abständen, die für alle Punkte der Punktewolke dieser dreidimensionalen Darstellung (Re) bestimmt werden.

7. Vorrichtung nach Anspruch 6, *bei der* diese Suchmittel (22) dazu konfiguriert sind, die Punkte des generischen Modells in einer vorher definierten Sphäre um den interessierenden Punkt herum zu suchen.

8. Vorrichtung nach Anspruch 6 oder 7, *bei der* die normalen Richtungen durch Konstruktion einer Seite mittels der Koordinaten, der am nächsten zum interessierenden Punkt liegenden drei oder vier Punkten, bestimmt werden.

9. Vorrichtung nach einem der Ansprüche 1 bis 8, *bei der* diese Anpassungsmittel (23) enthalten:

   - Mittel zur Erkennung (16) der charakteristischen Punkte (Pref) auf dieser dreidimensionalen Darstellung (Re); und
   - Mittel zur Verformung (18) des generischen Modells (m1-m3) in Rotation und/ oder Translation, so dass diese Position dieser charakteristischen Punkte einer Position der charakteristischen Punkte des generischen Modells entspricht.

10. Vorrichtung nach einem der Ansprüche 1 bis 9, *bei der* das erwähnte Referenzelement (45) einem Handschuh entspricht und die erwähnten Bewegungssequenzen (Tr, Tx) entsprechen Bewegungen, ausgeführt vom Handschuh bei einer Massage.

**Claims**

1. A device for defining a generic movement sequence (Tx) on a generic model (m1-m3), which comprises:

   - means for acquiring (40, 45) the position (Pr) of a reference element (45) moving over a surface; said reference element (45) being configured to perform an actual movement sequence (Tr);
   - means for recording (41, 46) said sequence of actual movements (Tr);
   - means for acquiring (14) a three-dimensional representation (Re) of said surface;
   - means for adapting (23) said generic model (m1-m3) to said three-dimensional representation (Re) of said surface; and
   - means for defining (42,47) a generic movement sequence (Tx) on said generic model (m1-m3) by applying, to said real movement sequence (Tr), said adaptation between said generic model (m1-m3) and said three-dimensional representation (Re) of said surface.

**2.** The device according to claim 1, ***wherein*** said adaptation means (23) are configured to fit said generic model (m1-m3) to said three-dimensional representation (Re) of said surface; said recording means (41) are configured to record said actual movement sequence (Tr) on said generic model (m1-m3) as it is fitted to the dimensions of said three-dimensional representation (Re) of said surface and said defining means (42) are configured to transform said generic model (m1-m3) with said recorded movement sequence so that said generic model resumes those initial parameters.

**3.** The device according to claim 1, ***wherein*** said adaptation means (23) are configured to calculate the difference between said generic model (m1-m3) and said three-dimensional representation (Re) of said surface; said recording means (46) are configured to record said actual movement sequence (Tr) independently of said generic model (m1-m2) said defining means (47) are configured to transform said recorded movement sequence according to the difference calculated by said adaptation means (23); and ***wherein*** the device comprises a means for positioning (48) said generic movement sequence on said generic model.

**4.** The device according to claim 2 or 3, ***wherein*** said acquisition means (40, 45) of said position (Pr) of said reference element (45) are configured to detect an orientation of said reference element (45) to report this orientation on the various points of the sequence of the generic displacements (Tx).

**5.** The device according to Claim 2 or 3, ***wherein*** said acquisition means (40, 45) of the said position (Pr) of the said reference element (45) are configured to detect the actions carried out or the stresses undergone by the said element of reference (45) to transfer these actions or these constraints to the various points of the generic movement sequence (Tx).

**6.** The device according to claim 1, ***wherein*** said generic model (m1-m3) and said three-dimensional representation (Re) of said surface being formatted in the shape of point clouds, said adaptation means (23) comprise:

- means for calculating (19) a normal direction to each point of said three-dimensional representation (Re) of said surface; and
- search means (20) for each point of the point cloud of said three-dimensional representation (Re) of the point of the generic model (m1-m3) in a close neighborhood for which the difference between the normal direction of the point of the generic model (m1-m3) and the normal direction of the point of interest is the lowest;
- means for determining (21) a distance between said detected point of the generic model (m1-m3) and said point of interest; and
- means for searching (22) for a global transformation of the generic model (m1-m3) as a function of the distances determined for all the points of the point cloud of said three-dimensional representation (Re).

**7.** The device according to claim 6, ***wherein*** said search means (22) are configured to search for the points of the generic model in a preset sphere around the point of interest.

**8.** The device according to claim 6 or 7, ***wherein*** the normal directions are determined by constructing a face using the coordinates of the three or four points closest to the point of interest.

**9.** The device according to one of Claims 1 to 8, ***wherein*** said adaptation means (23) comprise:

- means for detecting (16) feature points (Pref) on said three-dimensional representation (Re); and
- means for transforming (18) the generic model (m1-m3) in rotation and/or in translation, so that said position of said feature points corresponds to a position of feature points of the generic model.

**10.** The device according to any of claims 1 to 9, ***wherein*** said reference element (45) corresponds to a glove and said movement sequences (Tr, Tx) correspond to movements performed by said glove during a massage.

**Fig. 1**

Re

14

pré-traitement — 15

m3
m2
m1

Pref

détection points caractéristiques — 16

Re

sélection modèle générique — 17

première adaptation — 18

calcul des normales — 19

recherche adaptation normale — 20

21 — calcul distance adaptation

22 — recherche transformation moyenne

23 — détermination transformation modèle

13

Re

14

45

acquisition — 40

Pr — 45

Re

enregistrement séquence — 41

Tr

déformation modèle et séquence — 42

Tx

# Fig. 2

14

acquisition — 45

enregistrement séquence — 46

déformation séquence — 47

association séquence et modèle — 48

Tx

# Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015187092 A

- FR 3067957 A1

**Littérature non-brevet citée dans la description**

- **KINECTFUSION.** *Real-time 3D Reconstruction and Interaction Using a Moving Depth Camera,* 16 Octobre 2011
- **PISHCHULIN.** Building Statistical Shape Spaces for 3D Human Modeling. *Published in Pattern Recognition 2017,* 19 Mars 2015

- **SUZUKI, S. ; ABE, K.** Topological Structural Analysis of Digitized Binary Images by Border Following. *CV-GIP,* 1985, vol. 30 (1), 32-46
- **SKLANSKY, J.** Finding the Convex Hull of a Simple Polygon. *PRL,* 1982, (1), 79-83
- **HU.** Visual Pattern Recognition by Moment Invariants. *IRE Transactions on Information Theory,* 1962, vol. 8 (2), 179-187